# EUROPÄISCHE PATENTSCHRIFT

(11) **EP 0 653 581 B1**
(45) Veröffentlichungstag und Bekanntmachung des Hinweises auf die Patenterteilung: **27.01.1999**
(21) Anmeldenummer: 94116971.6
(22) Anmeldetag: 27.10.1994
(51) Int. Cl.: F16K 11/074

(54) **Misch- und Absperrventil**
Mixing and shut-off valve
Robinet mitigeur et d'arrêt

(30) Priorität: 12.11.1993 DE 4338701
(43) Veröffentlichungstag der Anmeldung: 17.05.1995
(73) Patentinhaber: FRIEDRICH GROHE AKTIENGESELLSCHAFT, D-58675 Hemer (DE)
(72) Erfinder: Pawelzik, Manfred, D-59494 Soest (DE); Eisbach, Peter, D-58706 Menden (DE); Weiss, Roland, D-58640 Iserlohn (DE)

(56) Entgegenhaltungen:
- DE-A- 2 803 663
- FR-A- 2 499 664
- FR-A- 2 623 269

## Beschreibung

Die Erfindung betrifft ein Misch- und Absperrventil, insbesondere für den Sanitärbereich, mit einem drehbaren Handgriff und einem je eine Einlaßöffnung für das kalte und warme Medium sowie eine Auslaßöffnung aufweisenden Ventilgehäuse, in dem eine Ventilsitzscheibe drehfest gehaltert ist und an der eine mit dem Handgriff drehbare Ventilregulierscheibe dichtend angelagert ist, wobei die Ventilsitzscheibe auf einem Umkreis in ihrem Peripheriebereich angeordnete und mit den Einlaß-und Auslaßöffnungen in Verbindung stehende Einlaßdurchbrüche und einen zentralen Auslaßdurchbruch aufweist, welche andererseits mit einer den Auslaßdurchbruch überdeckenden Ausnehmung in der Ventilregulierscheibe in Überlappung bringbar sind, so daß aus der Absperrstellung bei einer Betätigung des Handgriffs zunächst lediglich zunehmend Kaltwasser abgegeben wird.

Derartige Misch- und Absperrventile sind als Wasserventile bekannt (FR-A-2 499 664) und werden vielfach auch als Sicherheitsmischbatterien bezeichnet, da aus der Absperrstellung bei einer Betätigung des Drehgriffs zunächst lediglich zunehmend Kaltwasser von dem Mischventil abgegeben wird. Erst nach dem Erreichen der maximalen Kaltwasserausflußmenge wird bei weiterer Drehung zunehmend Warmwasser dem Kaltwasser zugemischt, so daß ein unbeabsichtigtes Heißwasserzapfen und die damit auftretende Gefahr von Verbrühungen weitgehend vermieden wird. Bei diesen bekannten Mischventilen erfolgt jedoch der Öffnungsvorgang mit einer Rechtsdrehung des Handgriffs, d.h. im Uhrzeigersinn. Dieses wird häufig als nachteilig empfunden, da normalerweise Ventile mit einer Linksdrehung, d.h. gegen den Uhrzeigersinn geöffnet werden.

Der Erfindung liegt die Aufgabe zugrunde, das eingangs angegebene Misch- und Absperrventil zu verbessern und insbesondere so auszubilden, daß der Öffnungsvorgang mit einer Linksdrehung durchführbar ist.

Diese Aufgabe wird erfindungsgemäß mit den Merkmalen des Anspruchs 1 gelöst.
Weitere Ausgestaltungen der Erfindung sind in den Ansprüchen 2 bis 10 angegeben.

Mit den vorgeschlagenen Maßnahmen kann ein kompaktbauendes Misch- und Absperrventil bzw. ein Sicherheitsmischventil für die Wassermischung und Wasserdurchflußmengendosierung geschaffen werden, welches mit einem Drehgriff oder einem Drehhebel betätigbar ist, wobei aus der Absperrstellung bei einer Linksdrehung zuerst dosiert Kaltwasser, nach weiterer Linksdrehung Mischwasser und nach kompletter Linksdrehung bis zum Anschlag Heißwasser gezapft werden kann. Durch die erfindungsgemäße Anordnung der Ein- und Auslaßdurchbrüche in der Ventilsitzscheibe kann insbesondere erreicht werden, daß das Ventilgehäuse als Kartuschengehäuse, in dem die Ventilelemente gekapselt angeordnet sind und welches als Baueinheit in Armaturenkörper einsetzbar ist, so ausgebildet werden kann, daß die wesentlichen Außenabmessungen und die Wasseranschlüsse einer bekannten Eingriffmischventilkartusche, bei der ein Handgriff und die zugehörige Ventilregulierscheibe in zwei Freiheitsgraden bewegbar vorgesehen sind, entsprechen. Die Lagerhaltung der Armaturenkörper kann somit vereinfacht werden, da die gleichen Armaturenkörper sowohl mit einer herkömmlichen Eingriffmischventilkartusche als auch mit dem erfindungsgemäßen Misch- und Absperrventil versehen werden können. Außerdem kann auch noch nachträglich in bereits installierten Armaturenkörpern die herkömmliche Eingriffmischventilkartusche gegen ein erfindungsgemäßes Misch- und Absperrventil ausgetauscht werden.

Ein Ausführungsbeispiel der Erfindung ist in der Zeichnung dargestellt und wird im folgenden näher beschrieben. Es zeigt
- Figur 1: ein in einen Armaturenkörper eingesetztes Misch- und Absperrventil in der Schnittebene I der Figur 3;
- Figur 2: das Misch- und Absperrventil gemäß Figur 1 in der Schnittebene II;
- Figur 3: das Misch- und Absperrventil gemäß Figur 1 in der Schnittebene III;
- Figur 4: die in Figur 1 gezeigte Mengenregulierscheibe in Draufsicht auf die Dichtflächenseite;
- Figur 5: die in Figur 4 gezeigte Mengenregulierscheibe im Seitenschnitt;
- Figur 6: die in Figur 1 gezeigte Ventilsitzscheibe in Draufsicht auf die Dichtflächenseite;
- Figur 7: die in Figur 6 gezeigte Ventilsitzscheibe im Seitenschnitt;
- Figur 8: die Lage der Ausnehmung in der Ventilregulierscheibe zu den Durchbrüchen in der Ventilsitzscheibe in Absperrstellung;
- Figur 9: die Lage der Ausnehmung in der Ventilregulierscheibe zu den Durchbrüchen in der Ventilsitzscheibe in der voll geöffneten Kaltwasserstellung;
- Figur 10: die Lage der Ausnehmung in der Ventilregulierscheibe zu den Durchbrüchen in der Ventilsitzscheibe in einer Mischwasserstellung, in der beide Einlaßdurchbrüche von der Ausnehmung halb überlappt sind;
- Figur 11: die Lage der Ausnehmung in der Ventilregulierscheibe zu den Durchbrüchen in der Ventilsitzscheibe in der voll geöffneten Heißwasserstellung.

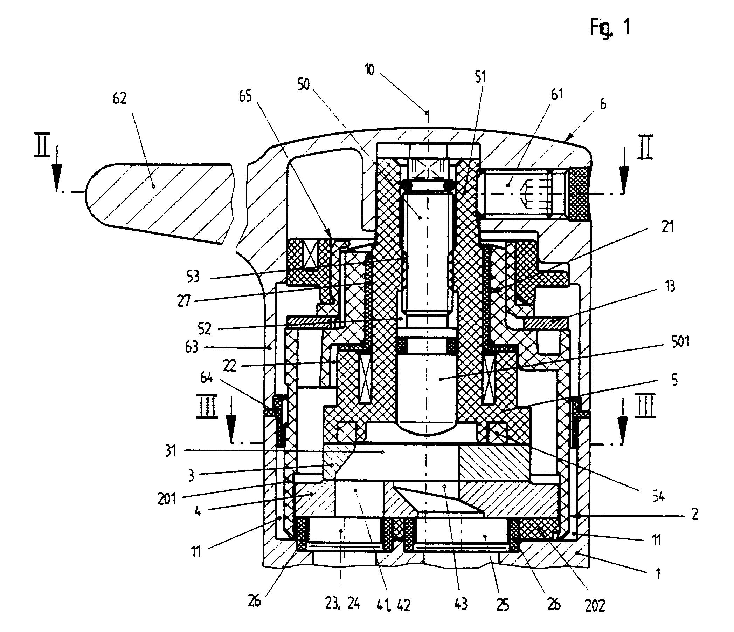

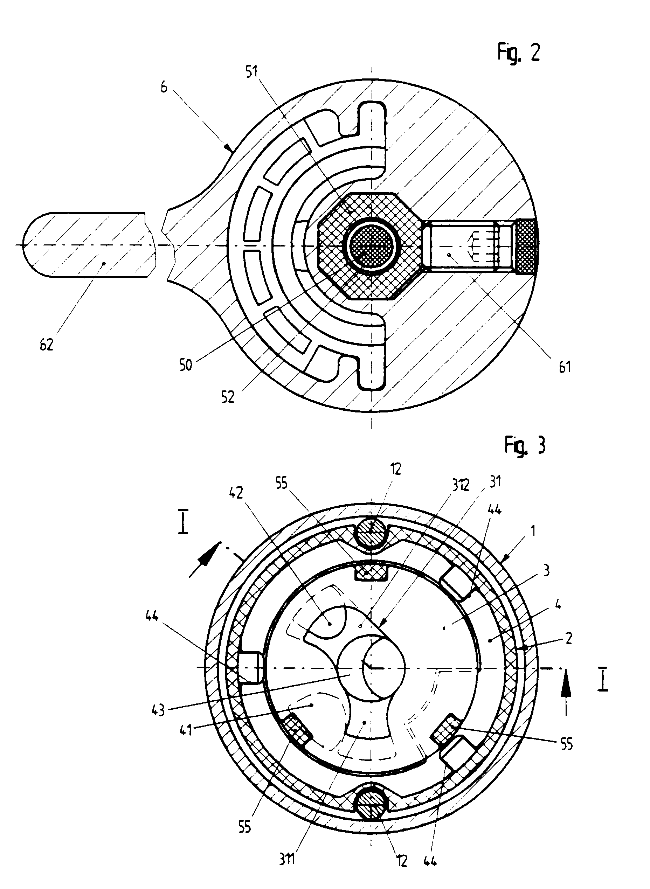

Das Misch- und Absperrventil ist in der Zeichnung in den Figuren 1 bis 3 in einem Kartuschengehäuse 2 als Ventilgehäuse gekapselt angeordnet und in einem Armaturenkörper 1 einmontiert dargestellt. Das Kartuschengehäuse 2 besteht aus einem Hülsenteil 201 und einem Bodenteil 202, wobei im Bodenteil 202 eine Einlaßöffnung 23 für den Kaltwasserzufluß, eine Einlaßöffnung 24 für den Warmwasserzufluß und eine Auslaßöffnung 25 für den Wasserabfluß vorgesehen ist. Zu den öffnungen 23,24,25 sind in dem Armaturenkörper 1 entsprechende Kanäle für die Zu- und Abführung ausgebildet, wobei zur dichten Überleitung zwischen dem Misch- und Absperrventil und dem Armaturenkörper 1 in den öffnungen 23,24,25 Schlauchdichtungen 26 angeordnet sind, die an der einen Stirnseite dichtend an dem Armaturenkörper 1 und an der anderen Stirnseite dichtend an der äußeren Stirnseite einer Ventilsitzscheibe 4 anliegen. Das Kartuschengehäuse 2 ist dabei in einer Aufnahmekammer 11 des Armaturenkörpers 1 angeordnet und wird dabei zur Halterung und dichten Verpressung mit Hilfe einer an einer Ringfläche des Hülsenteils 201 anliegenden metallenen Scheibe 13 und in den Armaturenkörper 1 eindrehbaren Spannschrauben 12 dicht verspannt. Auf der gegenüberliegenden Seite des Kartuschengehäuses 2 ist koaxial zur Mittelachse 10 ein Zapfen 51 eines Mitnehmerglieds 5 herausgeführt. Auf dem Zapfen 51 ist ein haubenförmiger Handgriff 6 vorgesehen und mit einem radial zur Mittelachse 10 angeordneten Gewindestift 61 in der Stecklage gesichert. Der Handgriff 6 weist dabei einen radial vorstehenden Hebel 62 auf. Zur drehsicheren Verbindung ist der Handgriff 6 mit dem Zapfen 51 über ein Achtkantprofil, wie es insbesondere aus Figur 2 zu entnehmen ist, verbunden. Um einen harmonischen Übergang zum Armaturenkörper 1 herzustellen, weist der Handgriff 6 eine konzentrische Schürze 63 auf, die einen entsprechend dem Außendurchmesser des Armaturenkörpers 1 aufweisende Außenmantelfläche hat. Zum dichten Übergang und als Führung ist an der Übergangsstelle zwischen Armaturenkörper 1 und Schürze 63 eine Führungshülse 64 aus gut gleitfähigem Material vorgesehen.

In dem Kartuschengehäuse 2 ist das Mitnehmerglied 5 mit dem Zapfen 51 in einer Lagerbohrung 21 begrenzt auf 90° drehbar gelagert, wobei das Mitnehmerglied 5 zur axialen Abstützung an einer Schulter 22 des Hülsenteils 201 anliegt. Zur verschleißarmen und dauerhaften Leichtgängigkeit ist zwischen dem Mitnehmerglied 5 und der Lagerbohrung 21 mit der Schulter 22 eine entsprechend geformte Gleithülse 27 zwischengeordnet.
An der gegenüberliegenden Seite des Mitnehmerglieds 5 ist eine Ventilregulierscheibe 3 aus Keramikmaterial mit Hilfe von Nasen 55 drehfest und von einem Dichtring 54 gedichtet aufgenommen. An der gegenüberliegenden Stirnseite der Ventilregulierscheibe 3 ist die ebenfalls aus Keramikmaterial hergestellte Ventilsitzscheibe 4 angelagert. Die aneinanderliegenden Stirnflächen der Ventilregulierscheibe 3 und der Ventilsitzscheibe 4 sind derart feinstbearbeitet, daß eine wasserdichte Aneinanderpressung noch ein relativ leichtgängiges Verdrehen zueinander ermöglicht. Zu diesem Zweck ist die Ventilsitzscheibe 4 axial begrenzt verschiebbar drehfest mit Schlitzen 44 im Hülsenteil 201 des Kartuschengehäuses 2 gehaltert.

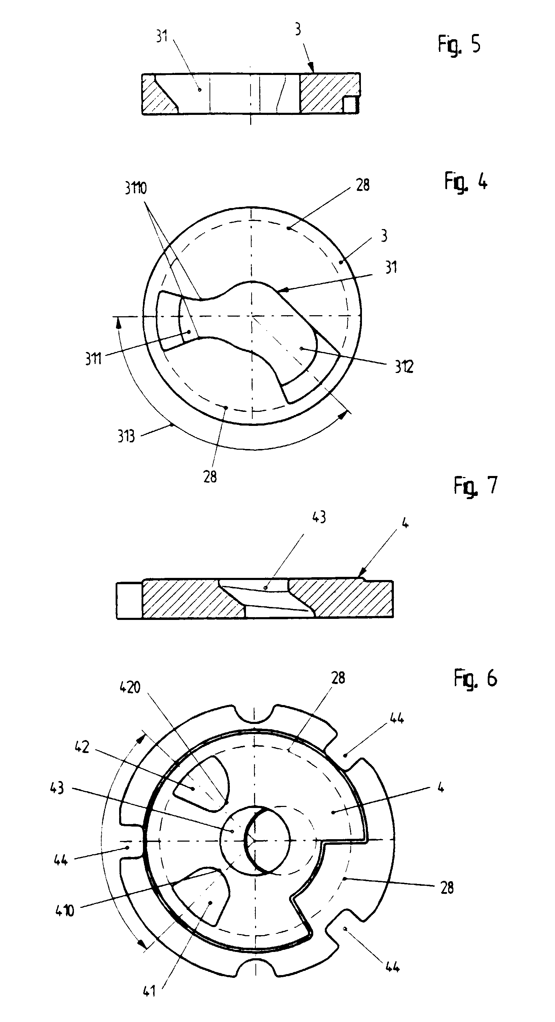

In der kreisförmigen Ventilsitzscheibe 4 ist im Zentrum ein Auslaßdurchbruch 43 ausgebildet, der auf der äußeren Stirnseite mit der Schlauchdichtung 26 gedichtet mit einem entsprechenden Kanal im Armaturenkörper 1 verbunden ist. In der vorderen, dem Benutzer zugekehrten Hälfte der Ventilsitzscheibe 4 ist ein Einlaßdurchbruch 41 für Kaltwasser und ein Einlaßdurchbruch 42 für Warmwasser ausgebildet. Die beiden Durchbrüche sind an dem Außenbereich von einem konzentrisch zum Auslaßdurchbruch 43 angeordneten Umkreis 28 begrenzt und weisen einen Abstand von 90° auf. Die Einlaßdurchbrüche 41,42 sind dabei als Kreisringsegmente ausgebildet, deren innere Stirnseite jeweils mit einem Radius 410,420 begrenzt ist.
Zur Verbindung der Einlaßdurchbrüche 41,42 mit dem Auslaßdurchbruch 43 ist in der Ventilregulierscheibe 3 eine Ausnehmung 31 ebenfalls als Durchbruch ausgebildet. Die Ausnehmung 31 ist, wie es insbesondere aus Figur 4 zu entnehmen ist, knieförmig ausgebildet, wobei das Knie den zentral angeordneten Auslaßdurchbruch 43 umfaßt und einen ersten Fortsatz 311 zur Verbindung mit dem Einlaßdurchbruch 41 für Kaltwasser und einen zweiten Fortsatz 312 für die Verbindung mit dem Einlaßdurchbruch 42 für das Warmwasser aufweist. Beide Fortsätze 311,312 sind am Randbereich wiederum von dem Umkreis 28 begrenzt. Die beiden Fortsätze 311,312 sind mit einem Winkel 313 von etwa 130° zueinander angeordnet. Der Fortsatz 311 weist dabei eine Einschnürung 3110 auf, so daß in der geschlossenen Ventilstellung der Fortsatz 311 den erforderlichen Abstand zur Abdichtung zu den beiden Einlaßdurchbrüchen 41,42 aufweist.

In dem Mitnehmerglied 5 ist koaxial zur Mittelachse 10 eine Bohrung 52 vorgesehen, in der ein Bewegungsgewinde 53 ausgebildet ist. In der Bohrung 52 ist eine Gewindespindel 50 mit einem Drosselventilkörper 501 axial bewegbar und gedichtet angeordnet. Die Gewindespindel 50 kann von außen über eine Drehbewegung axial verstellt werden, so daß der Durchtritt zum Auslaßdurchbruch 43 gedrosselt werden kann, wobei der Auslaßdurchbruch 43 einen Ventilsitz für den Drosselventilkörper 501 bildet.
Die Drehbewegung des Mitnehmerglieds 5 ist durch Anschläge in dem Kartuschengehäuse (in der Zeichnung nicht dargestellt) auf 90° begrenzt.
Zur wahlweisen Begrenzung der Heißwassertemperatur ist außerdem eine auf dem Kartuschengehäuse 2 aufsetzbare Anschlagvorrichtung 65 angeordnet. Hierbei ist ein äußerer Ring drehfest mit dem Handgriff 6 verbunden, während ein innerer Ring in verschiedenen Drehstellungen auf einen vorstehenden Ansatz des Hülsenteils 201 des Kartuschengehäuses 2 aufgesteckt werden kann.

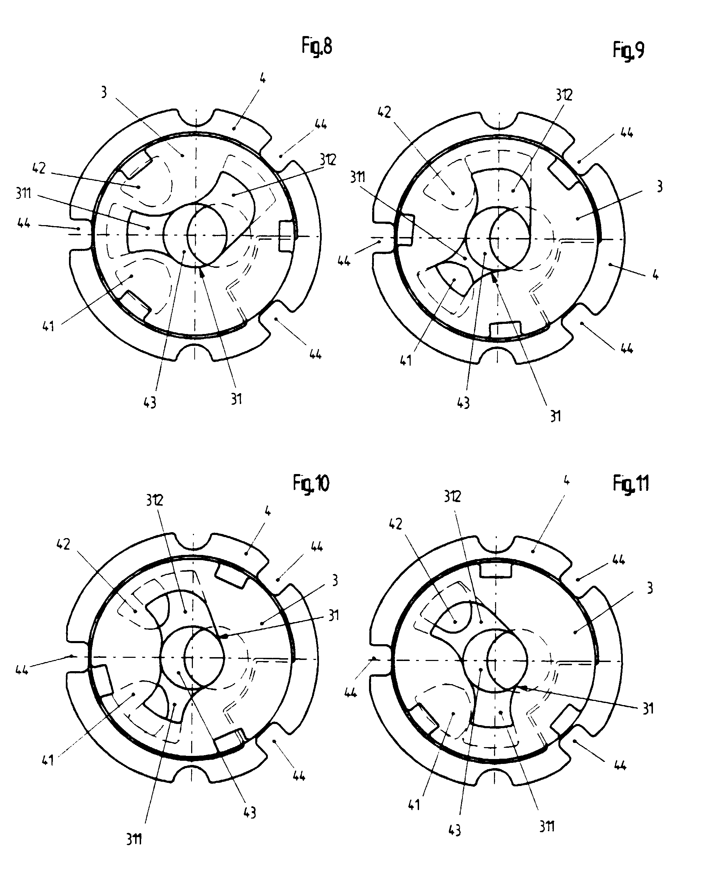

Das vorstehend beschriebene Misch- und Absperrventil hat folgende Funktionsweise:
Das zufließende Kalt- und Warmwasser wird separat den Einlaßöffnungen 23,24 und den Einlaßdurchbrüchen 41,42 aus dem Armaturenkörper 1 zugeführt. In der in Figur 1 und 3 dargestellten Stellung befindet sich das Misch-und Absperrventil in der voll geöffneten Heißwasserstellung. Durch eine Rechtsdrehung des Handgriffs 6 um 90° kann das Ventil in die Absperrstellung gebracht werden, wie es in Figur 8 dargestellt ist. In dieser Stellung haben beide Einlaßdurchbrüche 41,42 keine Verbindung zu der Ausnehmung 31.
Wird der Handgriff 6 aus der Absperrstellung durch eine Linksdrehung bewegt, so gelangt der Fortsatz 311 zunehmend mehr in Überdeckung mit dem Einlaßdurchbruch 41 für Kaltwasser, so daß in Abhängigkeit vom Drehwinkel zunehmend mehr Kaltwasser dem Armaturenkörper 1 zugeführt wird.
Bei einer Drehung um 45° ist der Einlaßdurchbruch 41 für das Kaltwasser völlig von dem Fortsatz 311 überdeckt, so daß in dieser Stellung, wie es in Figur 9 der Zeichnung dargestellt ist, die maximale Kaltwassermenge dem Armaturenkörper 1 zugeführt wird.
Wird der Handgriff 6 weiter nach links verdreht, so gelangt nunmehr zunehmend Warmwasser von dem Einlaßdurchbruch 42 über den Fortsatz 312 in den Auslaßdurchbruch 43, während in gleichem Maße der Durchtritt von Kaltwasser aus dem Einlaßdurchbruch 41 vermindert wird, so daß die Gesamtausflußmenge etwa konstant bleibt und temperiertes Mischwasser erzeugt wird.
In der in Figur 10 gezeigten Drehstellung ist eine etwa gleichmäßige halbe überdeckung der beiden Einlaßdurchbrüche 41,42 durch die Fortsätze 311,312 gegeben, so daß in dieser Stellung ein Mischwasser mit mittlerer Temperatur erzeugt wird.
Bei einer weiteren Linksdrehung des Handgriffs 6 wird der Einlaßdurchbruch 42 für Warmwasser weiter zunehmend vom Fortsatz 312 überdeckt, so daß schließlich reines Warmwasser an den Armaturenkörper 1 abgegeben wird, wie es in Figur 11 der Zeichnung dargestellt ist.

Sollte eine Drosselung der maximalen Gesamtdurchflußmenge vorgenommen werden, so kann der in Figur 1 gezeigte Drosselventilkörper 501 mit Hilfe der Gewindespindel 50 verstellt werden. Hierzu wird der Handgriff nach dem Lösen des Gewindestiftes 61 axial von dem Zapfen 51 abgezogen, so daß der Drosselventilkörper 501 durch Drehen der Gewindespindel 50 dem als Ventilsitz wirkenden Auslaßdurchbruch 43 angenähert werden kann, so daß eine entsprechende Drosselung der Ausflußmenge erfolgt.

Das Kartuschengehäuse 2, in dem die einzelnen Ventilelemente gekapselt als Baueinheit zusammengefaßt sind, weist hierbei die Außenabmessungen einer Ventilkartusche mit in zwei Freiheitsgraden bewegbaren Ventilregulierscheibe zur Einstellung des Mischungsverhältnisses und der Durchflußmenge auf, so daß wahlweise die vorstehend beschriebene Baueinheit des Misch- und Absperrventils oder eine in zwei Freiheitsgraden stellbare Ventilkartusche in den Armaturenkörper 1 eingesetzt werden kann.

## Patentansprüche

1. Misch- und Absperrventil, insbesondere für den Sanitärbereich, mit einem drehbaren Handgriff (6) und einem je eine Einlaßöffnung (23,24) für das kalte und warme Medium sowie eine Auslaßöffnung (25) aufweisenden Ventilgehäuse, in dem eine Ventilsitzscheibe (4) drehfest gehaltert ist und an der eine mit dem Handgriff (6) drehbare Ventilregulierscheibe (3) dichtend angelagert ist, wobei die Ventilsitzscheibe (4) auf einem Umkreis in ihrem Peripheriebereich angeordnete und mit den Einlaß- und Auslaßöffnungen (23,24,25) in Verbindung stehende Einlaßdurchbrüche (41,42) und einen zentralen Auslaßdurchbruch (43) aufweist, welche andererseits mit einer den Auslaßdurchbruch (43) überdeckenden Ausnehmung (31) in der Ventilregulierscheibe (3) in Überlappung bringbar sind, so daß aus der Absperrstellung bei einer Betätigung des Handgriffs (6) zunächst lediglich zunehmend Kaltwasser abgegeben wird, dadurch gekennzeichnet, daß die Einlaßdurchbrüche (41,42) für das kalte und warme Medium in einer Hälfte der Ventilsitzscheibe (4) angeordnet sind und die Ausnehmung (31) knieförmig mit zwei radial sich erstreckenden, einen stumpfen Winkel (313) zueinander bildenden Fortsätzen (311,312) gestaltet ist, wobei der erste Fortsatz (311) für das kalte Medium vorgesehen und so dimensioniert ist, daß er sich bei geschlossenem Mischventil zwischen den beiden Einlaßdurchbrüchen (41,42) mit dem erforderlichen Abstand zur Abdichtung zu den beiden Einlaßdurchbrüchen (41,42) befindet und bei einer Linksdrehung aus der Absperrstellung zunehmend mit dem Einlaßdurchbruch (41) für das kalte Medium in Überdeckung gelangt, während der zweite Fortsatz (312) so plaziert ist, daß erst bei maximaler Überdeckung des ersten Fortsatzes (311) mit dem zugehörigen Einlaßdurchbruch (41) und bei weiterer Linksdrehung dieser Fortsatz (312) zunehmend mit dem Einlaßdurchbruch (42) für das warme Medium in Überdeckung gelangt, derart, daß gleichzeitig eine entsprechende Abnahme der Überdeckung des ersten Fortsatzes (311) mit dem Einlaßdurchbruch (41) für das kalte Medium erfolgt.

2. Misch- und Absperrventil nach Anspruch 1, dadurch gekennzeichnet, daß die beiden Fortsätze (311,312) mit einem Winkel (313) von etwa 130° zueinander angeordnet sind.

3. Misch- und Absperrventil nach Anspruch 1 oder 2, dadurch gekennzeichnet, daß der erste Fortsatz (311) eine Einschnürung (3110) aufweist und die Einlaßdurchbrüche (41,42) als Kreisringsegmente ausgebildet sind, deren innere Stirnseite jeweils von einem Radius (410,420) begrenzt ist.

4. Misch- und Absperrventil nach einem der Ansprüche 1 bis 3, dadurch gekennzeichnet, daß die Einlaßdurchbrüche (41,42) einen Abstand von 90° aufweisen.

5. Misch- und Absperrventil nach einem der Ansprüche 1 bis 4, dadurch gekennzeichnet, daß die Ventilregulierscheibe (3) von einem Mitnehmerglied (5) drehfest und gedichtet aufgenommen ist und das Mitnehmerglied (5) mit einem Zapfen (51) drehbar und durch eine Lagerbohrung (21) aus dem Ventilgehäuse herausgeführt ist und Mittel zur Befestigung des Handgriffs (6) aufweist, wobei das Mitnehmerglied (5) an einer Schulter (22) im Ventilgehäuse zur Abstützung und Axialsicherung der Ventilregulierscheibe (3) und der Ventilsitzscheibe (4) anliegt.

6. Misch- und Absperrventil nach Anspruch 5, dadurch gekennzeichnet, daß das Mitnehmerglied (5) koaxial zur Mittelachse (10) im Zapfen (51) eine Bohrung (52) mit einem Bewegungsgewinde (53) aufweist, in der gedichtet eine Gewindespindel (50) eines Drosselventils zur Drosselung der maximalen Ausflußmenge angeordnet ist, wobei an der Gewindespindel (50) ein Drosselventilkörper (501) ausgebildet ist, der mit dem als Drosselventilsitz ausgebildeten Auslaßdurchbruch (43) zusammenwirkt.

7. Misch- und Absperrventil nach Anspruch 5 oder 6, dadurch gekennzeichnet, daß an dem Mitnehmerglied (5) Anschlagnocken ausgebildet sind, die mit entsprechenden Anschlägen am Ventilgehäuse die Drehbewegung der Ventilregulierscheibe (3) von der Absperrstellung bis zum Ausfluß des maximal warmen Mediums begrenzen.

8. Misch- und Absperrventil nach Anspruch 7, dadurch gekennzeichnet, daß wenigstens ein zusätzlich mit der Hand des Benutzers lösbarer oder als überdrehbarer Rastpunkt ausgebildeter Anschlag vorgesehen ist.

9. Misch- und Absperrventil nach wenigstens einem der Ansprüche 1 bis 8, dadurch gekennzeichnet, daß das Ventilgehäuse als ein alle Ventilelemente aufnehmendes Kartuschengehäuse (2) ausgebildet ist und etwa den Außenabmessungen einer Ventilkartusche mit in zwei Freiheitsgraden bewegbarer Ventilregulierscheibe zur Einstellung des Mischungsverhältnisses und der Durchflußmenge entspricht.

10. Misch- und Absperrventil nach wenigstens einem der Ansprüche 1 bis 8, dadurch gekennzeichnet, daß der Drehwinkel des Handgriffs (6) von der Absperrstellung bis zur voll geöffneten Warmwasserstellung 90° beträgt.

## Claims

1. Mixing and shut-off valve, especially for the field of sanitary installations, having a rotatable handgrip (6) and a valve housing which has one inlet hole (23, 24) each for the cold and warm media and an outlet hole (25) and in which a valve seat disc (4) is held non-rotatably, against which valve seat disc (4) there is sealingly mounted a valve regulation disc (3) capable of being rotated by means of the handgrip (6), the valve seat disc (4) having inlet through-holes (41, 42), which are arranged on a concentric circle in its peripheral region and are in communication with the inlet and outlet holes (23, 24, 25), and a central outlet through-hole (43), which on the other face can be brought into an overlapping relationship with an opening (31) in the valve regulation disc (3), which opening (31) overlies the outlet through-hole (43), so that when the handgrip (6) is actuated, starting from the shut-off position, only cold water is increasingly delivered at first, characterised in that the inlet through-holes (41, 42) for the cold and warm media are arranged in one half of the valve seat disc (4) and the opening (31) is formed in a knee shape having two extensions (311, 312), which extend radially and form an obtuse angle (313) with respect to one another, the first extension (311) being provided for the cold medium and having dimensions such that it is located, when the mixing valve is closed, between the two inlet through-holes (41, 42) at the distance from the two inlet through-holes (41, 42) necessary for sealing off and, on rotation to the left from the shut-off position, increasingly comes to overlie the inlet through-hole (41) for the cold medium, while the second extension (312) is so positioned that only when the first extension (311) has come to overlie the associated inlet through-hole (41) to a maximum extent and rotation to the left is continued does that extension (312) come increasingly to overlie the inlet through-hole (42) for the warm medium in such a manner that there is simultaneously a corresponding reduction in the extent to which the first extension (311) overlies the inlet through-hole (41) for the cold medium.

2. Mixing and shut-off valve according to claim 1, characterised in that the two extensions (311, 312) are arranged at an angle (313) of approximately 130° with respect to one another.

3. Mixing and shut-off valve according to claim 1 or 2, characterised in that the first extension (311) has a narrowing (3110), and the inlet through-holes (41, 42) are constructed as sectors of an annulus, the inner end face of which is, in each case, defined by a radius (410, 420).

4. Mixing and shut-off valve according to any one of claims 1 to 3, characterised in that the inlet through-holes (41, 42) are spaced 90° apart.

5. Mixing and shut-off valve according to any one of claims 1 to 4, characterised in that the valve regulation disc (3) is held, non-rotatably and sealed, by a carrier element (5); and the carrier element (5) is capable of being rotated by means of a post (51), extends out of the valve housing through a bearing bore (21) and has means for attaching the handgrip (6), with the carrier element (5) abutting a shoulder (22) in the valve housing for support and axial retention of the valve regulation disc (3) and the valve seat disc (4).

6. Mixing and shut-off valve according to claim 5, characterised in that the carrier element (5) has in the post (51), coaxially with respect to the central axis (10), a bore (52) having a displacement thread (53), in which bore (52) there is arranged, sealed, a threaded stem (50) of a throttle valve for restricting the maximum outflow, there being constructed on the threaded stem (50) a throttle valve body (501), which cooperates with the outlet through-hole (43), which is constructed as throttle valve seat.

7. Mixing and shut-off valve according to claim 5 or 6, characterised in that stopping lugs are constructed on the carrier element (5), which, together with corresponding stops on the valve housing, limit the rotary movement of the valve regulating disc (3) from the shut-off position to the outflow of the maximally warm medium.

8. Mixing and shut-off valve according to claim 7, characterised in that there is provided at least one stop that, in addition, can be released manually by the user or is constructed as a catching point past which further rotation is possible.

9. Mixing and shut-off valve according to at least one of claims 1 to 8, characterised in that the valve housing is constructed as a cartridge housing (2) accommodating all the valve elements and corresponds approximately to the external dimensions of a valve cartridge having a valve regulation disc that can be moved in two degrees of freedom for adjustment of the mixing ratio and the amount of flow.

10. Mixing and shut-off valve according to at least one of claims 1 to 8, characterised in that the angle of rotation of the handgrip (6) from the shut-off position to the fully opened warm water position is 90°.

## Revendications

1. Robinet mitigeur et d'arrêt, notamment pour des applications sanitaires, comprenant une poignée tournante (6) ainsi qu'un corps de robinet avec un orifice d'entrée respectif (23, 24) pour le fluide froid et pour le fluide chaud et un orifice de sortie (25), ce boîtier logeant de manière fixe un disque (4) formant siège de soupape contre lequel est appuyé de manière étanche un disque de commande (3) tournant avec la poignée (6), le disque formant siège de soupape (4) comportant, répartis sur un cercle dans sa zone périphérique, des passages (41, 42) communiquant avec les orifices d'entrée et de sortie (23, 24, 25) ainsi qu'un passage de sortie (43), central, ces passages pouvant être par ailleurs mis en chevauchement avec une cavité (31) recouvrant le passage de sortie (43) dans le disque de commande (3), de sorte qu'à partir de la position d'arrêt, lorsqu'on actionne la poignée (6), le robinet fournira tout d'abord de manière croissante de l'eau froide,
caractérisé en ce que
les passages d'entrée (41, 42) pour le fluide froid et le fluide chaud se trouvent dans une moitié du disque formant siège de soupape (4) et la cavité (31) a une forme de coude à deux branches (311, 312) faisant entre elles un angle obtus (313), la première branche (311) étant prévue pour le fluide froid et elle est dimensionnée pour que, lorsque le robinet mitigeur est fermé, elle se trouve entre les deux passages d'entrée (41, 42), à la distance nécessaire pour assurer l'étanchéité vis-à-vis des deux passages d'entrée (41, 42) et, si on tourne à gauche, à partir de la position de fermeture, cette branche arrive de façon croissante en chevauchement avec le passage d'entrée (41) pour le fluide froid alors que la seconde branche (312) est disposée pour arriver seulement lorsque le chevauchement de la première branche (311) et le passage d'entrée (41) correspondant est maximum, et que l'on continue de tourner à gauche, la branche 312 arrive de façon croissante en chevauchement avec le passage d'entrée (42) pour le fluide chaud, de façon à produire en même temps une diminution correspondante du chevauchement de la première branche (311) avec le passage d'entrée (41) du fluide froid.

2. Robinet mitigeur et d'arrêt selon la revendication 1,
caractérisé en ce que
les deux branches (311, 312) font entre elles un angle (313) d'environ 130°.

3. Robinet mitigeur et d'arrêt selon l'une quelconque des revendications 1 ou 2,
caractérisé en ce que
la première branche (311) comporte une partie rétrécie (3110) et les passages d'entrée (41, 42) sont en forme de segments d'anneaux de cercles dont la face frontale intérieure est respectivement délimitée par un rayon (410, 420).

4. Robinet mitigeur et d'arrêt selon l'une quelconque des revendications 1 à 3,
caractérisé en ce que
les passages d'entrée (41, 42) sont distants d'un angle de 90°.

5. Robinet mitigeur et d'arrêt selon l'une quelconque des revendications 1 à 4,
caractérisé en ce que
le disque de commande (3) est reçu solidairement en rotation et de manière étanche par un organe d'entraînement (5) et cet organe (5) sort du corps de robinet par un tourillon (51) en traversant un perçage formant palier (21), et il comporte des moyens de fixation de la poignée (6), l'organe d'entraînement (5) venant contre un épaulement (22) du corps de robinet pour assurer l'appui et le blocage axial du disque de commande (3) et du disque formant siège de soupape (4).

6. Robinet mitigeur et d'arrêt selon la revendication 5,
caractérisé en ce que
l'organe d'entraînement (5) comporte, coaxialement à l'axe (10), dans le prolongement (51), un perçage (52) avec un filetage de mouvement (53) recevant de manière étanche une broche filetée (50) d'une soupape d'étranglement pour étrangler le débit maximum de sortie, et la broche filetée (50) est formée comme organe d'étranglement (501) coopérant avec le passage de sortie (43) réalisé sous la forme de siège de soupape d'étranglement.

7. Robinet mitigeur et d'arrêt selon l'une quelconque des revendications 5 ou 6,
caractérisé en ce que
l'organe d'entraînement (5) comporte des cames formant butées qui limitent, avec des butées correspondantes du corps de robinet, le mouvement de rotation du disque de commande (3), entre la position d'arrêt et le débit du fluide chaud maximum.

8. Robinet mitigeur et d'arrêt selon la revendication 7,
caractérisé par
au moins une butée supplémentaire que l'utilisateur peut libérer à la main ou qui est réalisée comme point d'accrochage interdisant une rotation excessive.

9. Robinet mitigeur et d'arrêt selon l'une quelconque des revendications 1 à 8,
caractérisé en ce que
le corps de robinet est un boîtier de cartouche (2) recevant tous les éléments du robinet et ses dimensions correspondent sensiblement à celles d'une cartouche de soupape avec un disque de commande de soupape mobile suivant deux degrés de liberté pour régler le rapport de mélange et le débit.

10. Robinet mitigeur et d'arrêt selon l'une quelconque des revendications 1 à 8,
caractérisé en ce que
l'angle de rotation de la poignée (6), entre la position d'arrêt et la position d'ouverture complète de l'eau chaude, est de 90°.
